# EUROPEAN PATENT APPLICATION

(11) **EP 2 119 545 A2**
(43) Date of publication of application: **18.11.2009**
(21) Application number: 07859001.5
(22) Date of filing: 11.12.2007
(51) Int. Cl.: B29B 17/00, F23G 5/027, F23G 5/033

(54) **A DEVICE AND A METHOD FOR THE DISPOSAL OF TIRES**

(30) Priority: 24.01.2007 UA 2007000722
(71) Applicant: Berezin, Gregory Abramovich, 42751 Netanya (IL); Teplitsky, Alexander Arkadievich, 42318 Netanya (IL)
(72) Inventor: MADATOV, Artem Valeriyovich, M. Dniprodzerzhinsk, 51905 (UA)
(74) Representative: Rupprecht, Kay
(86) International application number: PCT/IB2007/003863
(87) International publication number: WO 2008/090405

(57) **Abstract**

A method for the recovery of tires, mainly waste tires, comprises feeding waste tires into a pyrolysis column; their exposure to an alternating magnetic field for heating them up to a rubber thermal decomposition temperature; removing volatile products formed in the rubber thermal decomposition process; cooling fixed residues of thermal decomposition products; and removing them out of the pyrolysis column. The tires are previously divided into parts, which parts are fed then into the pyrolysis column through a charging opening, and the induction heating of the tire parts is performed by inducing induced currents in a metal cord of the tire parts with an alternating magnetic field of between 1 kHz and 1000 kHz in frequency. The present invention relates also to a device for carrying out this method.

## Description

The present invention relates to the field of the processing and recovery of tires, mainly waste tires, by their thermal decomposition and may be practiced for waste tire pyrolysis, in particular, for the pyrolysis of waste tires which are previously divided into parts.

Under the present days' production conditions, ensuring safe, environmentally friendly and economical waste product recovery is a crucial factor. Currently, therefore, a tendency is clearly manifested to improve already existing methods for waste product recovery as well as to simplify significantly recovery device configurations and, at the same time, to increase their operational reliability and safety all these ensuring, on the whole, improvement in the economy of waste product recovery. What is also needed currently is reduction in power consumption and expenditure of recovery processes as well as ensuring recovery product recycling.

In particular, in the field of the processing and recovery of tires, mainly waste tires, by their thermal decomposition, the most widely used are tire recovery methods involving whole tires or methods comprising heating electrically tires to be recovered and removing then mechanically metal rings with the tire beads being notched. These methods have a number of substantial disadvantages. Charging whole tires into a recovery device is connected with significant process difficulties because 95% of the volume of tires to be recovered are occupied by air. Moreover, air which enters the recovery device is mixed with pyrolysis gases this resulting in increase in a nitrogen level and an oxygen level of the gas mixture. Nitrogen reduces significantly the calorific value of a gaseous fuel used. Furthermore, during each charge, the pyrolysis gases enter the "dead space" of feeding means of the recovery device which dead space has a volume equal to that of at least one tire and, during the return motion of the feeding means, the pyrolysis gases may emit to the atmosphere. This may result in the deterioration of the ecological situation and constitutes danger to the operating personnel. In order to prevent the above phenomena from occurring, the appropriate measures should be taken such as, for example, blowing the feeding means and sealing means with indifferent gas or sweet gas or water steam. This increases total expenditure and current expenses and results in an economic inexpedience of the implementation of such method.

Another aspect which worsens economic results of the pyrolysis process and method implementation as a whole is a low bulk density of whole tires within recovery device of about 0.15 t/m³ this also increasing total expenditure and current expenses for method implementation. The transportation of whole tires to processing facilities costs more than that of previously divided tires.

Methods comprising a previous division of tires to be recovered into parts are also often economically inexpedient because such division requires the use of devices specially designed for this purpose or the employment of non-traditional methods for waste tire destruction such as, for example, an explosion-aided destruction. The design, development, introduction, and operation of special devices for dividing tires into parts require additional costs as well as result in the complication of a recovery device construction and a tire recovery process as a whole. The methods which comprise the employment of non-traditional methods for waste tire destruction have the same disadvantages.

Russian Federation patent No. 2057014 discloses a method for waste tire destruction and a device for carrying out this method. The method comprises tire treatment with high-frequency currents as well as the induction heating of a metal cord with power currents. The method further comprises tire cooling. The waste tire destruction is performed using an explosion while an additional reduction is performed by a repeated explosive treatment of tire fragments produced by the explosive destruction of tires.

The basic disadvantages of the above method include its process complexity as well as its insufficient effectiveness for it is only intended for tire integrity destruction while fails to provide the complete recovery of tires. In addition, the complexity of this method results in the complexity of a device to carry out the method this also resulting in increase in total expenditure.

Known from the state of the art is also a waste tire recovery device disclosed in Russian Federation patent No. 2176953 which device allows the induction heating to be applied by inducing low-frequency induced currents in a metal cord of waste tires. The placement of waste tires on the magnetic core of a channel-type induction furnace requires, however, the magnetic core to be made of a split construction this being connected with significant engineering difficulties. Moreover, at the time of magnetic core breaking, the current in the primary winding of a transformer must be reduced using a special regulator since an abrupt reduction in inductive resistance may result in a possible winding failure.

The basic disadvantage of such furnace is the impossibility to adjust heating power for the furnace height.

Known from the state of the art is a method for the heat treatment of waste tires and rubber goods disclosed in Russian Federation patent No. 2248881. A device to carry out the method in accordance with this invention has a pyrolysis column comprising a tire supply means into which waste tires previously divided into parts are charged; a sealed feeder connected to a reactor the reactor being provided with a heating means and a discharging means for discharging rubber pyrolysis gaseous products and comprising a second temperature zone. The reactor has also outlets to discharge fixed residues. The device to carry out the method in accordance with this invention comprises also a fixed residue receiver-extinguisher; a furnace to which a heated air enters after fixed residue receiver-extinguisher cooling; and a heat exchanger located within the reactor.

The basic disadvantages of this device include its complexity and a low capacity of the waste tire recovery process. Also, the method which is carried out using said device has the disadvantage of its process complexity caused by that waste tires are processed in the atmosphere of recycled pyrolysis gases in the reactor at 200°C to 500°C and pyrolysis products are separated using a separation apparatus. The disadvantages of this method include also its rather low effectiveness as well as a high materials consumption.

The most similar to a device in accordance with the present invention is a waste tire recovery device disclosed in Ukrainian utility model patent No. 15001, the device comprising: connected successively to each other a tire feeding means; and a pyrolysis column provided with a tubular inductor and means for discharging gaseous and solid pyrolysis products. A waste tire recovery method carried out using said device comprises heating tires with electric currents induced in a metal cord when the tires are placed in a low-frequency alternating magnetic field.

The basic disadvantage of the described device as well as of the method carried out using said device is that in order to provide induced currents of a high intensity sufficient enough to heat steel tire wires up to a temperature of between 350°C and 500°C, the magnetic field lines must go through a closed circuit formed by steel tire wires. Said method and device are only suitable, thus, for the recovery of whole tires. Attributed to the disadvantages may also be the necessity to remove closed rings of the metal cord from the magnetic core upon completion of the rubber pyrolysis by melting it through heating up to 1600°C. This results in a higher electricity consumption and requires the use of a heat-resisting and heat-insulating material for the furnace hearth, as well as a forced cooling of the magnetic core. Yet another disadvantage is that, if using low-frequency induced currents, the inductor powered by an AC mains directly or via a transformer has large power losses, the losses of so called reactive power.

Accordingly, it is an object of the present invention to provide a method for the recovery of tires, mainly waste tires, which method, owing to both simplicity and versatility thereof, would make it possible to ensure a high capacity of the recovery method thereby the recovery of tires previously divided into parts would be made possible with providing conditions for heating these parts, as well as reduction in power consumption in the recovery process, reduction in expenditure for method implementation would be ensured, as well as a high safety and environmental harmlessness of the method would be ensured.

It is also an object of the present invention to provide a device to carry out the method for the recovery of tires, mainly waste tires, which device, owing to both simplicity and versatility thereof, would also make it possible to ensure a high capacity of the recovery method thereby reduction in power consumption in the recovery process, reduction in expenditure for operating the device would be ensured, as well as a high safety and environmental harmlessness of the device would be ensured.

The object set is attained, in accordance with the present invention, by a method for the recovery of tires, mainly waste tires, comprising feeding waste tires into a pyrolysis column; their exposure to an alternating magnetic field for heating them up to a rubber thermal decomposition temperature; removing volatile products formed in the thermal decomposition process; cooling fixed residues of rubber thermal decomposition products and removing them out of the pyrolysis column. In the method in accordance with the present invention, the tires are previously divided into parts, which parts are fed then into the pyrolysis column through a charging opening, the induction heating of the tire parts is performed by inducing induced currents in a metal cord of the tire parts with an alternating magnetic field of between 1 kHz and 1000 kHz in frequency.

A previous division of tires into parts makes it possible to ensure reduction in the costs of both transportation and storage of tires to be recovered, as well as to ensure a technically simple charge of tires to be recovered into the device of the invention this improving, on the whole, the economic expediency of the method in accordance with the present invention. Moreover, the previous division of tires into parts promotes also the prevention of pyrolysis gases from emitting to the atmosphere because, in the recovery of tires already divided into parts, a so called "dead space" is not formed within a tire feeding means and in the internal volume of the device as a whole this in turn enabling a high safety and environmental harmlessness of the method to be ensured.

Expediently, the metal cord is heated by their exposure to an alternating magnetic field of between 1 kHz and 1000 kHz in frequency. The exposure of the metal cord to a high-frequency magnetic field causes a high-frequency cyclic remagnetization of a ferromagnetic material of the metal cord which remagnetization is accompanied by a heat release. Such frequency range of the alternating magnetic field is chosen because, in the event of the exposure of the metal cord to a less than 1 kHz alternating magnetic field, a heat release will be insignificant and heating the metal cord divided into parts will be ineffective. The induction heating at a frequency of an alternating magnetic field of more than 1000 kHz is also inexpedient for equipment of the respective power is hard to manufacture. Furthermore, the employment of such frequency is economically inexpedient.

Preferably, the induction heating of waste tires divided into parts is performed by their exposure to an alternating magnetic field of between 2.0 kHz and 100 kHz in frequency since, for this frequency range, commercialized current generators and an element base for them are already available. Said frequency range is also the most preferred because it was found experimentally that, just at such frequencies, the heating process takes place in the most effective way and a specific power consumption is minimized.

Expediently, tires to be recovered are divided into 2 to 8 parts because such division simplifies the process of charging products into and discharging them from the device. In a preferred embodiment of the present invention, tires are divided into parts the length of metal cord sections wherein is between 3 cm and 20 cm. The division of tires into parts the length of the metal cord wherein is less than 3 cm is economically inexpedient and results in rise in the cost of the method of the invention. The division of tires into parts the length of the metal cord wherein is more than 20 cm is also inexpedient for this results in reduction in the bulk density of tires within the device of the invention this in turn resulting in increase in total expenditure and current expenses in the implementation of the method in accordance with the present invention.

Expediently, when waste tires previously divided into parts are fed into the pyrolysis column, fine metal objects are added, where required, thereto. This enables the method in accordance with the present invention to be implemented without a metal cord because, in such case, heat will be released in these metal objects this allowing the rubber to be heated. Wire cuttings, washers, nuts and any other metal objects, preferably, of between 1 cm and 20 cm in size, may be used as such fine metal objects.

In a preferred embodiment of the present invention, the tires are pressed to the gas tightness density in the charging opening zone. This operation is performed using the tire feeding means. This embodiment makes it possible to prevent completely noxious pyrolysis gases from emitting to the environment this in turn enabling a high safety and environmental harmlessness of the method to be ensured. Moreover, in pressing the tires divided into parts, most of air is pressed out of their parts thereby preventing air from entering the recovery device this in turn making it possible to prevent the efficiency of the method in accordance with the present invention from being decreased and the power consumption thereof from being increased.

The other object set is attained, in accordance with the present invention, by a device for the recovery of tires, mainly waste tires, comprising connected successively to each other a tire feeding means; and a pyrolysis column provided with a tubular inductor and means for discharging pyrolysis gaseous and solid products; the device being provided with a high-frequency electric current generator with the tubular inductor being connected thereto; the tire feeding means being configured as a charging hopper which communicates with the pyrolysis column through a charging opening and a charging screw; and the means for discharging pyrolysis solid products being configured as a discharging screw.

The waste tire recovery device in accordance with the present invention comprises a heat-insulated pyrolysis column, possibly, of a cylindrical shape, with an internal refractory layer. In a preferred embodiment of the present invention, the internal refractory layer is made using grog. Grog (also called firesand or chamotte) is a fired fireclay; it contains mullite 3Al₂O₃-2SiO₂ (40% and 60%, respectively); its refractoriness or fire resistance is between 1670°C and 1750°C. Grog is produced by firing refractory clays or heat-resisting clays at a temperature of between 1000°C and 1400°C.

As the tire feeding means with which the cylindrical pyrolysis column is provided, the charging hopper which communicates with the pyrolysis column through the charging opening and the charging screw is used. The charging hopper is configured of a conical shape. The charging screw is also configured of a conical shape, and, within it, tires previously divided into parts are moved along the charging screw which rotates within a body. The charging screw is made with its pitch and diameter which decreases in the direction from the input end of the charging screw to the charging opening. Such configuration of the waste tire recovery device in accordance with the present invention enables the tire parts to be pressed to the gas tightness density and the tire parts pressed to be pushed forcedly through the charging opening and through the pyrolysis column regardless of orientation with respect to the horizontal thereby a reliable sealing of the internal volume of the device in accordance with the present invention and the prevention of noxious pyrolysis gases from emitting to the environment are ensured this in turn enabling an environmental safety of the waste tire recovery method in accordance with the present invention.

The pyrolysis column is provided with a heating means. As the heating means, the tubular inductor connected to the high-frequency electric current generator is used. The tubular inductor comprises a coil made of metal tubes the cavities whereof are connected to a water source for cooling the coil. The coil is coiled round the cylindrical pyrolysis column and is connected to the terminals of the high-frequency electric current generator. When the temperature within the pyrolysis column reaches a value exceeding 350°C, rubber pyrolysis with the release of pyrolysis volatile products begins. The pyrolysis volatile products are removed through a gas outlet provided in an inlet portion of the pyrolysis column. Such configuration of the waste tire recovery device in accordance with the present invention makes it possible to carry out the process of the recovery of tires previously divided into parts because the employment of a high-frequency magnetic field which is induced within the device of the invention by inductor currents makes it possible to provide conditions for heat release in steel tire wire lengths of tires divided into parts.

The pyrolysis column is provided with the means for discharging solid pyrolysis products. As the means for discharging solid pyrolysis products, the discharging screw, which communicates with the pyrolysis column and has a cylindrical shape, is used. The discharging screw is also configured with an opening for capturing and discharging products which are produced in the course of the recovery process such as a pyrolysis carbon residue, metal cord, and additional fine metal objects. The screw body is made water cooled for quenching a hot fixed residue. Such configuration of the waste tire recovery device in accordance with the present invention enables safety and an environmental harmlessness in the operation of the device of the invention to be ensured owing to that the discharging screw presses the pyrolysis fixed residue thereby removing the pyrolysis gases therefrom.

### BRIEF DESCRIPTION OF DRAWINGS

An embodiment of the present invention is shown in the accompanying drawings, in which:

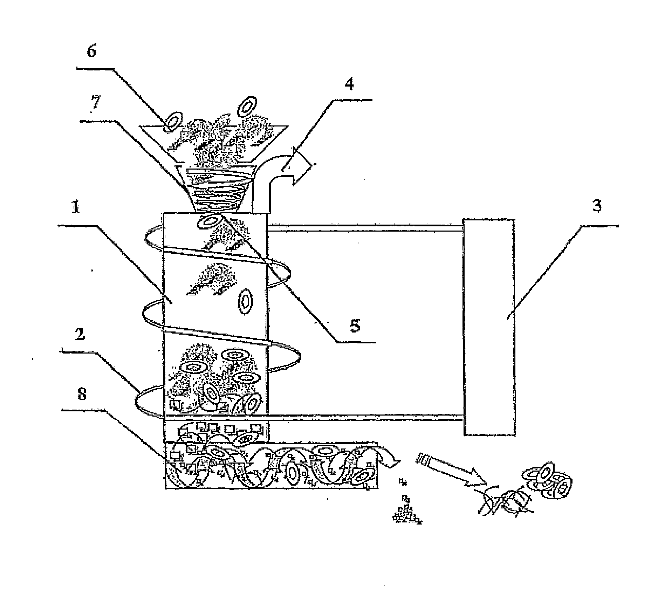

Fig. 1 shows a longitudinal sectional view of a tire recovery device in accordance with the present invention.

Fig. 1 shows an example of an embodiment of a device for the recovery of tires, mainly waste tires, in a longitudinal sectional view. The tire recovery device comprises a pyrolysis column 1 of a cylindrical shape, preferably, but not necessarily, vertical, provided with a heating means in the form of a tubular inductor 2 which is connected to a high-frequency electric current generator 3. The pyrolysis column 1 is provided with a gas outlet 4, as well as with a tire feeding means and a means for discharging pyrolysis solid products. The pyrolysis column is also provided with a charging opening 5. The tire feeding means comprises a charging hopper 6 and a charging screw 7. The means for discharging pyrolysis solid products comprises a discharging screw 8.

The tire recovery method in accordance with the present invention is carried out using the device for carrying out the same as follows:
Waste tires to be recovered are divided previously into parts, in particular, into 2 to 8 parts. In doing so, a tire is divided so that the length of the metal cord wherein is between 3 cm and 20 cm depending on the size of the waste tires being recovered. Following such division, the tires are transported to recovery facilities.

The tires previously reduced are charged into the charging hopper 6 and fed then by the charging screw 7 into the charging window 5 of the pyrolysis column 1. In addition, the charging screw 7 presses the tire parts to the gas tightness density and pushes them forcedly into the charging window 5 thereby preventing the pyrolysis gases from emitting to the environment, as well as presses air out of the tires being recovered thereby preventing the air from entering the recovery device.

Upon connection of the tubular inductor 2 to the high-frequency electric current generator 3, inductor currents induce an alternating magnetic field within the pyrolysis column 1. The frequency of this alternating magnetic field may vary from 1 kHz to 1000 kHz. Preferably, an alternating magnetic field of between 2.0 kHz and 100 kHz in frequency is employed since, for this frequency range, commercialized high-frequency current generators and an element base for them are already available. Upon exposure to the alternating magnetic field, a cyclic remagnetization occurs in the parts of the metal cord, which is a rope twisted of brass-plated steel wires and, as a result, a quick wire heating and a further tire rubber heating take place. In processing tires without a metal cord, fine ferromagnetic objects, preferably, iron fragments of between 1 cm and 20 cm in size, are charged additionally along with the tires previously divided into parts in which objects, in this case, heat release will occur.

When the temperature within the pyrolysis column reaches 350°C, rubber pyrolysis with the release of pyrolysis volatile products begins. The pyrolysis volatile products are removed through the upper gas outlet 4 provided in the inlet portion of the pyrolysis column 1 and are then separated and treated. At a temperature of between about 400°C and about 500°C, the final rubber pyrolysis takes place with the formation of a fixed residue and wire rings. The pyrolysis fixed residue descents by gravity to the bottom of the pyrolysis column 1 and then it is captured and discharged by the discharging screw 8. The pyrolysis fixed residue is pressed by means of said discharging screw 8 thereby the pyrolysis gases are removed therefrom and prevented from emitting to the environment. During the movement of the pyrolysis fixed residue through the discharging screw 8, the pyrolysis fixed residue is cooled with water, intermixed and reduced. The metal cord wires are separated finally from the carbonaceous material using, for example, a magnet. Where fine metal objects are used, these are also separated using a magnet and are fed then again to the charging hopper 6.

According to a first aspect of the present invention, there is, thus, provided a method for the recovery of tires, mainly waste tires, which method, owing to both simplicity and versatility thereof, makes it possible to ensure a high capacity of the recovery process. The method offers the opportunity to recover tires previously divided into parts. Reduction in power consumption in the recovery process, reduction in expenditure for the implementation of the method of the invention, and a high safety and environmental harmlessness thereof are ensured.

According to a second aspect of the present invention, there is provided a device to carry out the method for the recovery of tires, mainly waste tires, which device, owing to both simplicity and versatility thereof, also makes it possible to ensure a high capacity of the recovery process with a reduced power consumption and reduced other expenses for operating the device in accordance with the present invention.

The preceding detailed description is not intended to be limited to the specific forms set forth herein, but on the contrary, it is intended to cover such alternatives, modifications, and equivalents devised by those skilled in the art, as can be reasonably included within the spirit and scope of the appended claims.

## Claims

1. A method for the recovery of tires, mainly waste tires, the method comprising: feeding waste tires into a pyrolysis column; their exposure to an alternating magnetic field for heating them up to a rubber thermal decomposition temperature; removing volatile products formed in the rubber thermal decomposition process; removing fixed residues of rubber thermal decomposition products out of the pyrolysis column, **characterized in that** the tires are previously divided into parts, which parts are fed then into the pyrolysis column through a charging opening and the induction heating of the tire parts is performed by inducing induced currents in a metal cord of the tire parts with an alternating magnetic field of between 1 kHz and 1000 kHz in frequency.

2. The method according to claim 1, **characterized in that** the induced currents are induced with an alternating magnetic field of between 2.0 kHz and 3.5 kHz in frequency.

3. The method according to claim 1, **characterized in that** each tire is divided into 2 to 8 parts.

4. The method according to claim 1, **characterized in that** each tire is divided into parts the length of metal cord sections wherein is between 3 cm and 20 cm.

5. The method according to claim 1, **characterized in that** fine metal objects are introduced into the pyrolysis column along with the tire parts.

6. The method according to any one of claims 1 to 5, **characterized in that** the tire parts are pressed to the gas tightness density in the charging opening zone.

7. A device for the recovery of tires, mainly waste tires, the device comprising: connected successively to each other a tire feeding means; and a pyrolysis column provided with a tubular inductor and means for discharging pyrolysis gaseous and solid products **characterized in that** the device is provided with a high-frequency electric current generator with the tubular inductor being connected thereto; the tire feeding means is configured as a charging hopper which communicates with the pyrolysis column through a charging opening and a charging screw; and the means for discharging pyrolysis solid products is configured as a discharging screw.

8. The device according to claim 7, **characterized in that** the pyrolysis column is cylindrical.

9. The device according to claim 7 or 8, **characterized in that** the charging hopper and the charging screw are conical.
